# EUROPEAN PATENT APPLICATION

(11) **EP 3 109 600 A1**
(43) Date of publication of application: **28.12.2016**
(21) Application number: 15173741.8
(22) Date of filing: 25.06.2015
(51) Int. Cl.: G01D 5/347

(54) **OBJECT TURN ANGLE MEASURING INSTRUMENT, ITS PRODUCTION METHOD AND APPLICATION AREA**

(71) Applicant: Vilniaus Gedimino technikos universitetas, 10223 Vilnius (LT)
(72) Inventor: Brucas, Domantas, LT-10223 Vilnius (LT); Bansevicius, Ramutis, LT-44249 Kaunas (LT); Siaudinyte, Lauryna, LT-10223 Vilnius (LT)
(74) Representative: Zaboliene, Reda

(57) **Abstract**

This description presents an object axial turn angle measuring instrument utilizing conventional compact discs (1); conventional compact disc readers (2) are used to read turn angle information recorded on these discs. Information as markers, lines etc. (3) is written onto the compact disc the reading and processing of which enables determination of the angle at which the disc and the object attached thereto have turned.

The method to produce such measuring instruments in small quantities to enable highly flexible customisation of the parameters of the measuring instruments produced is an integral part of the invention. Special set of data to be recorded onto the disc (1) is selected when producing the measuring instrument, in accordance with the parameters of the measuring instrument to be produced. Dedicated software to be installed on the disc reading device (2) is selected for the specific recorded information. The said software controls the reading device, reads the information from the disc and interprets it to determine the object turn angle.

In addition, adaptation of such a measuring instrument for measurements of horizontal-plane turn angles of cameras (or other devices that require precise selection of direction) installed in unmanned aerial vehicles is presented.

## Description

### FIELD OF THE INVENTION

The invention described herein relates to measuring instruments, more specifically to object axial turn angle measuring instruments (also known as angular encoders); it also presents production method and application area of such an object.

### BACKGROUND OF THE INVENTION

The document US5747797A published on 5 May 1998 introduces an angle measuring instrument having a cylinder or a disc member with a surface grated so that it reflects the ray of light in different angles as the said member rotates. This document gives no information on producing the said grating on the surface of the member. Customization potential of the parameters of the measuring instrument is not mentioned either.

The patent EP1643216B1 published on 16 September 2009 presents a way of arrangement of disc markers and other production peculiarities, but the very method to produce the markers is not presented.

The patent application EP0685708A2 published on 6 December 1995 introduces a device that utilizes a compact disc attached to the rotating member in a stable and turn-free manner and reads the information recorded on the disc to determine the rotating member angular position after axial turn. The said application gives no information on the possibility to record on the disc information that would enable customization of parameters of the angle measuring instrument.

The review of the related art shows that despite wide spread of angle measuring instruments we could not find angle measuring instruments and production methods thereof suitable for small-scale production that requires extensive possibilities for customisation of parameters.

### SUMMARY OF THE INVENTION

The invention described herein introduces object axial turn angle measuring instrument produced by utilizing conventional compact discs, where turn angle information recorded on the disc can be read with common compact disc reading devices. Information (markers, lines etc) is written onto the compact disc the reading and processing of which enables determination of the angle at which the disc and the object attached thereto have turned.

The method to produce such measuring instruments in small quantities to enable highly flexible customisation of the parameters of the measuring instruments produced is an integral part of the invention. Special information to be recorded onto the disc is selected when producing the measuring instrument, in accordance with the parameters of the measuring instrument to be produced. Dedicated software to be installed on the disc reading device is selected for the specific recorded information. The said software controls the reading device, reads the information recorded on the disc and interprets it to determine the object turn angle.

Adaptation of such a measuring instrument for measurements of horizontal-plane turn angles of cameras (or other devices that require precise selection of direction) installed in unmanned aerial vehicles is also presented.

### BRIEF DESCRIPTION OF THE DRAWINGS

Fig. 1 shows arrangement of core components of angle measuring instrument, including disc and reading device.
Fig. 2 shows curve written on the disc and intended for absolute turn angle measurement.
Fig. 3 shows fragment of axonometric view of core components of angle measuring instrument (disc and reading device).

### DESCRIPTION OF THE PREFERRED EMBODIMENTS

The invention presented in this document is object axial turn angle measuring instrument along with its production method enabling simple selection of parameters and type for the measuring instrument to be produced as well as their easy customisation. The document also introduces a new method of application of such angle measuring instrument, intended for determining turn angles of cameras in unmanned aerial vehicles.

### Components

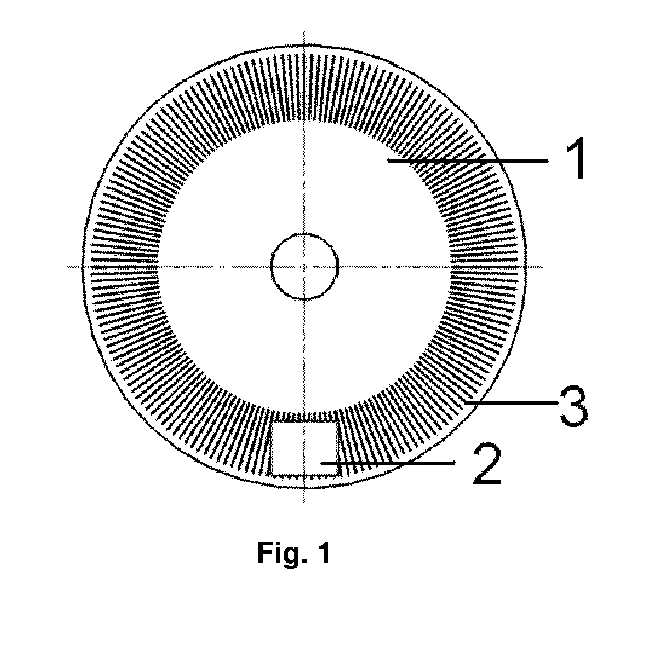

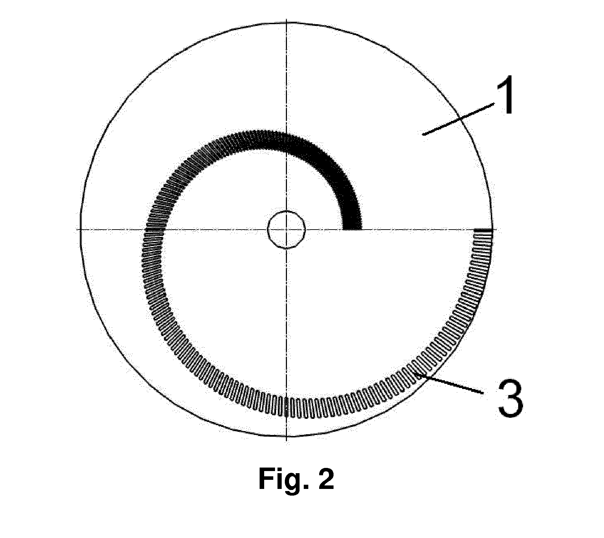

The angle measuring instrument comprises two main components: a compact disc Fig.1, Fig.2, Fig.3, (1) and an on-disc information (3) reading device (2).

For the purposes of this invention a compact disc (1) (hereinafter referred to as a compact disc or a disc) is disc-shaped member wherein (on the surface or in internal structure) information (markers, lines etc) (3) is written at the time of production. The key features characterising the compact disc (1) used in this invention are popularity, low cost, capability of being written / read with common compact disc writing devices. These features are best matched by optical disc used for this invention and intended for storing digital information (defined by IEC60908 and related standards). This invention can also be embodied with other discs (such as DVD, Blu-ray etc.) with features that are identical or comparable to the ones presented in this description. Compact disc (1) is attached to the rotating object (the turn angle of which is to be measured) in a stable and turn-free manner. As the object makes a turn it also turns the disc (1) the turn angle of which can be measured. Alternatively, disc (1) can be attached to stationary object and reading device (2) can be attached to rotating object; the reading device (2) must be attached so that it can read information (3) on the fixed disc (1) while making a turn (rotating).

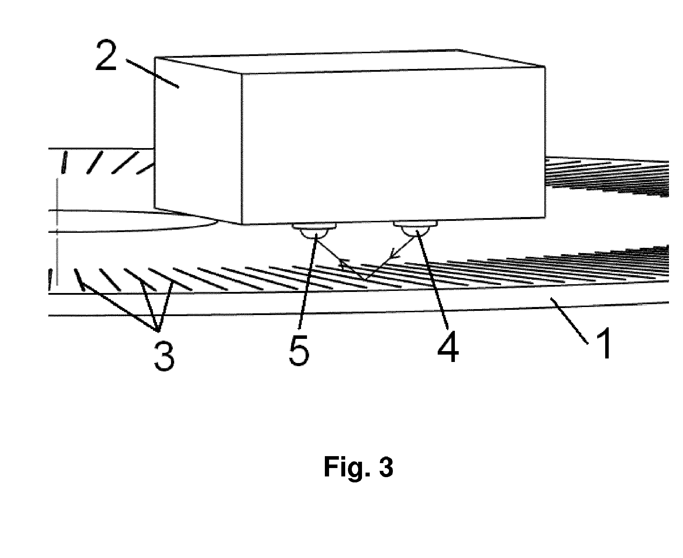

Another main component of the measuring instrument is information reading device (2) intended for reading information (3) recorded during production. The reading device (2) comprises two main devices: ray of light emitting device (4) and disc-reflected light detecting device (5). Both these devices are installed so that most of the emitted and reflected ray of light enters detecting device (5). Light device used in this invention is a 780 nm wavelength light-emitting semiconductor laser usually found installed in compact disc readers. Light-detecting photoelectric device (5) receives light reflected from the disc (1) and depending on type of the reflection generates corresponding electric signal. This electric signal is further transmitted to information processing device. Depending on type of compact disc (1) selected, light source Fig.3 (4) and light reading device Fig.3 (5) compatible with the technology of that type can be used.

### Production method

Angle measuring instrument production method presented herein is best suitable for small-scale production requiring great freedom for customisation of the measuring instruments produced. Production of a measuring instrument with desired parameters needs the following:
compact disc (1);
disc writing device (the function of this device can sometimes be performed by reading device (2)); and
disc reading device (2).

Once the appropriate parameters for the planned meter have been chosen and entered in software controlling disc writing device, the information (3) matching those parameters is written to the disc. Along with writing the information (3) matching the parameters to the compact disc (1), information (3) reading and read information (3) interpreting software suitable for reading information (3) recorded on that disc (1) and controlling the disc reading device (2) is selected. The said software capable of determining the turning object turn angle by using information (3) recorded on the disc (1) is written to the disc reading device (2). The disc reading device (2) along with the disc (1) with recorded information (3) constitute turn angle measuring instrument. Disc reading device (2) is a standard and widely used compact disc information reader having special software tailored for the specific information (3) on the disc (1) installed.

Disc writing device contains software for producing compact discs (1) for measuring instruments and disc reading device (2) contains software for controlling disc reading device (2) as well as reading the information (3) and interpreting it to enable determination of turn angle of turning object.

The type of information (3) written during production predetermines characteristics and type of the angle measuring instrument that will utilize the compact disc (1). Furthermore, information (3) written and type of this information are selected by disc writing device software depending on the measuring instrument required parameters and type of this instrument. Both relative and absolute angle measuring instruments can be produced by using the presented method of production of the measuring instrument.

When producing relative angle measuring instruments information (3) written to the disc can be oblong markers, lines. Markers, lines can be engraved, burnt or otherwise made on the disc with disc writing device. Direction of line made matches the disc (1) radius, but the length can vary: it will not necessarily be the same as the full length of the radius. Lines on the disc (1) must be made so that at least a portion of the full length of each line is at the same distance from the centre of the disc (1) (or from the edge of the disc (1)), in other words, so that when the disc reading device (2) is not moving and the disc (1) is turning all the written lines pass the reading device (2). As the compact disc (1) is turning the information reading device (2) is counting lines that pass the reading device (2). Knowing the distance between lines and the quantity of lines allows determining the turn angle. If the measuring instrument will be used for measuring not the entire 360° scale, but only a part of it, lines may be made not along the entire circumference of the disc (1) and to save space the remaining part of the compact disc (1) may be removed. Angle measuring instrument of this type features great tolerance to disc (1) or lines (3) being non-centred.

Internal form and arrangement of lines (3) made may vary, that is, electric signal received from detected ray of light will differ for different lines (3). Thus once lines (3) have been made and database is available, forms of signals coming from different lines (3) will enable application of the aforementioned relative-type measuring instrument as absolute-type measuring instrument, because each line becomes unique and enables determining disc (1) turn angle.

Absolute-type measuring instrument can also be made by recording an uninterrupted (unbroken) curve (3) (spiral) on a compact disc (1) so that it starts at the edge of the compact disc (1) and, as the disc is turned, is smoothly nearing the centre, that is, each individual compact disc (1) turn position gives according and specific (different) distance of curve from disc (1) edge (or centre). Such a curve (3) may not cross the disc (1) radius twice or more: the curve crosses any of the radiuses only once. When the disc (1) has turned, the reading device (2) finds (or, while the disc (1) is turning, tracks) the said curve (3) and uses the reading device (2) position as a basis for determining compact disc (1) turn angle. Information (3) that enables determining turn angle by using curve distance from disc (1) edge is written during disc production. Measuring instrument of this type does not offer extreme precision, therefore to increase precision the uninterrupted curve (3) (spiral) is supplemented with aforementioned scale comprising oblong markers in radius direction. Spiral can be used for absolute angle measurements and disc turn direction detection, and oblong markers enable extremely precise measurement of turn angle. Another possible embodiment is with the said markers in radius direction made not on the circle, but on the said spiral, that is, the said spiral can be drawn over the centres of all oblong markers. Thereby the quantity of markers that have passed the head enables determining the relative turn angle and the marker position relative to disc centre enables determining the absolute turn angle.

Another possible embodiment is making oblong markers (lines) on the disc (1) in the direction of radius of circle (as described earlier in the text) along with writing information just as it is commonly written to a compact disc. This gives two scales to determine disc turn angle, and two heads are used to read them. Data on a compact disc is usually written to spiral-shaped tracks as digital information. The said digital information is characterised by high density of information along the recording track, therefore reading information in very short intervals of track (sequences of only a few micrometers) and knowing its position on disc track enables determining relative disc turn angle. Furthermore, information of this type enables making a unique marker on some particular location on the disc and this marker may serve as a reference point in determining disc position. Initial disc position having been determined, as the disc turns its turn angle can be determined by counting markers that are in the direction of radius of circle and its turn angle can be very precisely determined by using data from spiral-shaped track. Therefore, if both scales of information are used and unique reference point has been made, compact disc can act as a component of precise turn absolute angle meter.

Writing information (3) to disc (1) it is possible to choose angle measuring instrument precision (depending on spacing between the lines written) and type (depending on kind of information written) and other parameters.

### Application for determination of turn angles of cameras in unmanned aerial vehicles

Turn angle measuring instrument presented herein can be easily applied for measurement of turn angles of cameras (or other devices requiring precise selection of direction) relative to unmanned aerial vehicle. Usually measurement of unmanned aerial vehicle camera inclination angle on vertical plane is easy: gyroscope- or accelerometer-based angle measuring instruments are used for this purpose. Angle measurement on horizontal plane is problematic, because the said vertical plane angle measuring instruments are not suitable for that and commonly used magnetometric measuring instruments do not possess adequate accuracy and are sensitive to interference with electronic equipment onboard aerial vehicle. The angle measuring instrument presented herein is free from these shortcomings. Disc (1) and reading device (2) are mounted in camera holder, near member that enables determination of camera turn angle on horizontal plane.

To illustrate and describe this invention, description of preferred embodiments is given above. This is not a complete or limiting description aimed at prescribing a precise embodiment or implementation option. The description given above should be regarded more as an illustration than a constraint. Obviously, the specialists in this field may clearly see a multitude of modifications and variations. The embodiment has been selected and described so as to enable the specialists in this field to best understand the principles behind this invention and their best practical application for different embodiments with different modifications fit for a specific application or embodiment customisation. The invention scope is defined by the attached claims and their equivalents wherein all the used terms have the broadest possible meanings unless stated otherwise.

Embodiments described by specialists in the respective field may contain changes that do not depart from the scope of this invention, as described in the claims given next.

## Claims

1. An object turn angle measuring instrument having:
disc-shaped member (1) with optically written information (3) and
reading device (2),
**characterised in that**
disc-shaped member (1) is customised and shaped for specific application, it may be round, semi-round, or cut as needed;
markers or lines are formed on the said disc member where each marker or line may be unique and produced optically with laser device or mechanically.

2. The object turn angle measuring instrument according to claim 1, **characterised in that** standard compact disc reading or writing devices are used to read or write information (3) to (from) the disc (1).

3. The object turn angle measuring instrument production method where measuring instrument parameters are customised for making markers (3) on the disc (1), **characterised in that** markers (3) are made on the disc (1) with conventional compact disc writing device.

4. Application of the object turn angle measuring instrument according to claim 1 or 2, **characterised in that** such measuring instruments are used in cameras installed in unmanned aerial vehicles, where their main function is to determine relative or absolute turn angle of camera on horizontal plane.
